# EUROPEAN PATENT APPLICATION

(11) **EP 4 503 676 A1**
(43) Date of publication of application: **05.02.2025**
(21) Application number: 23778168.7
(22) Date of filing: 28.03.2023
(51) Int. Cl.: H04W 4/70

(54) **METHOD AND APPARATUS FOR DETERMINING RADIO LINK FAILURE, AND TERMINAL AND NETWORK-SIDE DEVICE**

(30) Priority: 29.03.2022 CN 202210322674
(71) Applicant: VIVO MOBILE COMMUNICATION CO., LTD., Dongguan, Guangdong 523863 (CN)
(72) Inventor: ZHENG, Qian, Dongguan, Guangdong 523863 (CN)
(74) Representative: Lavoix
(86) International application number: PCT/CN2023/084289
(87) International publication number: WO 2023/185803

(57) **Abstract**

This application discloses a method and an apparatus for determining a radio link failure, and a terminal and a network side device, and belongs to the field of communication technologies. The method for determining a radio link failure in embodiments of this application includes: a first terminal communicates with a second terminal through at least one relay terminal; and the first terminal determines, in a case that a first event is satisfied, that a radio link failure (RLF) occurs in a relay communication radio link between the first terminal and a second terminal, where the first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

## Description

### CROSS-REFERENCE TO RELATED APPLICATIONS

This application claims priority to Chinese Patent Application No. 202210322674.8, filed on March 29, 2022 and entitled "METHOD AND APPARATUS FOR DETERMINING RADIO LINK FAILURE, AND TERMINAL AND NETWORK SIDE DEVICE", which is incorporated herein by reference in its entirety.

### TECHNICAL FIELD

This application relates to the field of communication technologies, and in particular, to a method and apparatus for determining a radio link failure, and terminal and network side device.

### BACKGROUND

Long term evolution (Long Term Evolution, LTE) systems support sidelink (Sidelink, SL) from a twelfth release version. Data may be transmitted between pieces of user equipment (User Equipment, UE) through the SL, and the data are transmitted without network devices such a base station.

Further, to better cover the SL and enable the data to be transmitted between the UEs at a long distance through the SL, researchers have proposed a U2U (UE-to-UE) Relay mechanism based on the SL. Specifically, An open Relay UE is arranged, and relay may be performed between the UEs through one or more Relay UEs. The UE is connected with the Relay UE, and the Relay UE is connected to the Relay UE through the SL, so that the data may be transmitted between the UEs at a long distance through the SL.

In a related art, whether a radio link between UEs fails to establish is determined based on a sidelink radio link failure (Sidelink Radio Link Failure, SL RLF) mechanism. However, a current SL RLF mechanism can only determine whether a radio link between two UEs that directly communicate with each other fails to establish, but cannot determine whether a radio link between UEs under the U2U Relay mechanism fails to establish. Service transmission quality between the two UEs under the U2U Relay mechanism cannot be ensured, and communication robustness is not high.

### SUMMARY

Embodiments of this application provide a method and an apparatus for determining a radio link failure, and a terminal and a network side device, which can solve a problem of low robustness of communication between UEs under a U2U Relay mechanism.

According to a first aspect, a method for determining a radio link failure is provided, including:
communicating, by a first terminal, with a second terminal through at least one relay terminal; and
determining, by the first terminal in a case that a first event is satisfied, that a radio link failure (RLF) occurs in a relay communication radio link between the first terminal and the second terminal.

The first event includes any one of the following:
a first timer being expired, the first timer being started by the first terminal upon transmission of a radio resource control (RRC) message to the second terminal through the relay communication radio link; and
receiving first indication information transmitted by a third terminal, the first indication information being used to indicate that the radio resource control (RLF) occurs in the relay communication radio link, and the third terminal is a terminal in the at least one relay terminal.

According to a second aspect, a method for determining a radio link failure is provided, including:
transmitting, by a third terminal, first indication information to a first terminal in a case that a radio link failure (RLF) occurs in a radio link between the third terminal and a next-hop terminal of the third terminal.

The first indication information is used to indicate that the RLF occurs in a relay communication radio link between the first terminal and a second terminal; the first terminal communicates with the second terminal through at least one relay terminal; and the third terminal is a terminal in the at least one relay terminal.

According to a third aspect, a method for determining a radio link failure is provided, including:
transmitting, by a network side device, configuration information related to a first timer to a first terminal, where the configuration information related to the first timer includes: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

According to a fourth aspect, an apparatus for determining a radio link failure is provided, including:
a communication module, configured to communicate with a second terminal through at least one relay terminal; and
a determination module, configured to determine, in a case that a first event is satisfied, that a radio link failure (RLF) occurs in a relay communication radio link between a first terminal and the second terminal.

The first event includes any one of the following:
a first timer being expired, the first timer being started by the first terminal upon transmission of a radio resource control (RRC) message to the second terminal through the relay communication radio link; and
receiving first indication information transmitted by a third terminal, the first indication information being used to indicate that the radio resource control (RLF) occurs in the relay communication radio link, and the third terminal is a terminal in the at least one relay terminal.

According to a fifth aspect, an apparatus for determining a radio link failure is provided, including:
a first transmission module, configured to transmit first indication information to a first terminal in a case that radio link failure (RLF) occurs in a radio link between a third terminal and a next-hop terminal of the third terminal.

The first indication information is used to indicate that the RLF occurs in a relay communication radio link between the first terminal and a second terminal; the first terminal communicates with the second terminal through at least one relay terminal; and the third terminal is a terminal in the at least one relay terminal.

According to a sixth aspect, an apparatus for determining a radio link failure is provided, including:
a second transmission module, configured to transmit configuration information related to a first timer to a first terminal, where the configuration information related to the first timer includes: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

According to a seventh terminal, a first terminal is provided. The terminal includes a processor and a memory, the memory stores a program or instructions executable on the processor, and the program or the instructions implement steps of the method for determining a radio link failure according to the first aspect.

According to an eighth aspect, a first terminal is provided, including a processor and a communication interface. The communication interface is configured to: communicate with a second terminal through at least one relay terminal. The processor is configured to: determine, in a case that a first event is satisfied, that a radio link failure (RLF) occurs in a relay communication radio link between the first terminal and the second terminal. The first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

According to a ninth terminal, a third terminal is provided. The terminal includes a processor and a memory, the memory stores a program or instructions executable on the processor, and the program or the instructions implement steps of the method for determining a radio link failure according to the second aspect.

According to a tenth aspect, a third terminal is provided, including a processor and a communication interface. The communication interface is configured to: transmit first indication information to a first terminal in a case that a radio link failure (RLF) occurs in a radio link between the third terminal and a next-hop terminal of the third terminal. The first indication information is used to indicate that the RLF occurs in a relay communication radio link between the first terminal and a second terminal; the first terminal communicates with the second terminal through at least one relay terminal; and the third terminal is a terminal in the at least one relay terminal.

According to an eleventh terminal, a network side device is provided. The network side device includes a processor and a memory, the memory stores a program or instructions executable on the processor, and the program or the instructions implement steps of the method for determining a radio link failure according to the third aspect.

According to a twelfth aspect, a network side device is provided, including a processor and a communication interface. The communication interface is configured to: transmit configuration information related to a first timer to a first terminal, where the configuration information related to the first timer includes: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

According to a thirteenth aspect, a system for determining a radio link failure is provided, including: a first terminal, a second terminal, a third terminal, and a network side device. The first terminal may be configured to perform steps of the method according to the first aspect. The third terminal may be configured to perform steps of the method according to the second aspect. The network side device may be configured to perform steps of the method according to the third aspect.

According to a fourth aspect, a readable storage medium is provided. The readable storage medium stores a program or instructions. The program or the instructions, when executed by a processor, implement steps of the method according to the first aspect, or implement steps of the method according to the second aspect, or implement steps of the method according to the third aspect.

According to a fifth aspect, a chip is provided. The chip includes a processor and a communication interface. The communication interface is coupled to the processor. The processor is configured to run a program or instructions to implement the method according to the first aspect, or implement the method according to the second aspect, or implement the method according to the third aspect.

According to a sixteenth aspect, a computer program/program product is provided. The computer program/program product is stored in a storage medium. The computer program/program product is executed by at least one processor to implement steps of the method according to the first aspect, or implement steps of the method according to the second aspect, or implement steps of the method according to the third aspect.

In the embodiments of this application, the first terminal communicates with the second terminal through the at least one relay terminal. The first terminal determines, in a case that the first event is satisfied, that the radio link failure (RLF) occurs in the relay communication radio link between the first terminal and the second terminal. In the embodiments of this application, the first terminal may determine, based on the first event, whether the RLF occurs in the relay communication radio link to solve a problem that a current SL RLF mechanism cannot determine whether a radio link fails to establish between UEs under a U2U Relay mechanism and enable service to be transmitted between the UEs on a premise that a radio link condition is good, thereby ensuring service transmission quality between two UEs under the U2U Relay mechanism and improving communication robustness.

### BRIEF DESCRIPTION OF THE DRAWINGS

FIG. 1 is a schematic diagram of a wireless communication system applicable to an embodiment of this application;
FIG. 2 is a schematic diagram of connections of various terminals in a U2U Relay mechanism according to an embodiment of this application;
FIG. 3 is a first schematic flowchart of a method for determining a radio link failure according to an embodiment of this application;
FIG. 4 is a second schematic flowchart of a method for determining a radio link failure according to an embodiment of this application;
FIG. 5 is a third schematic flowchart of a method for determining a radio link failure according to an embodiment of this application;
FIG. 6 is a fourth schematic flowchart of a method for determining a radio link failure according to an embodiment of this application;
FIG. 7 is a fifth schematic flowchart of a method for determining a radio link failure according to an embodiment of this application;
FIG. 8 is a sixth schematic flowchart of a method for determining a radio link failure according to an embodiment of this application;
FIG. 9 is a first schematic structural diagram of an apparatus for determining a radio link failure according to an embodiment of this application;
FIG. 10 is a second schematic structural diagram of an apparatus for determining a radio link failure according to an embodiment of this application;
FIG. 11 is a third schematic structural diagram of an apparatus for determining a radio link failure according to an embodiment of this application;
FIG. 12 is a schematic structural diagram of a communication device according to an embodiment of this application;
FIG. 13 is a schematic structural diagram of a terminal according to an embodiment of this application; and
FIG. 14 is a schematic structural diagram of a network side device according to an embodiment of this application.

### DETAILED DESCRIPTION

Technical solutions in embodiments of this application are clearly and completely described in the following with reference to accompanying drawings in the embodiments of this application. Apparently, the described embodiments are merely some rather than all of the embodiments of this application. All other embodiments obtained by those of ordinary skill in the art based on the embodiments of this application fall within the scope of protection of this application.

Terms "first", "second", and the like in this specification and claims of this application are used to distinguish similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or may be multiple. In addition, "and/or" used in the specification and claims represent at least one of the connected objects, and a character "/" in this specification generally indicates an "or" relationship between associated objects before and after.

It is worth pointing out that, technologies described in the embodiments of this application are not limited to a long term evolution (Long Term Evolution, LTE)/LTE-advanced (LTE-Advanced, LTE-A) system, and may alternatively be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. Terms "system" and "network" in the embodiments of this application may usually be used interchangeably. The described technologies may be applied the above-mentioned system and radio technology, and may alternatively be applied to other systems and radio systems. The following description describes a new radio (New Radio, NR) system for a purpose of giving examples, and the term NR is used in most of the following descriptions. However, these technologies may alternatively be applied to applications other than an NR system application, for example, a 6th generation (6th Generation, 6G) communication system.

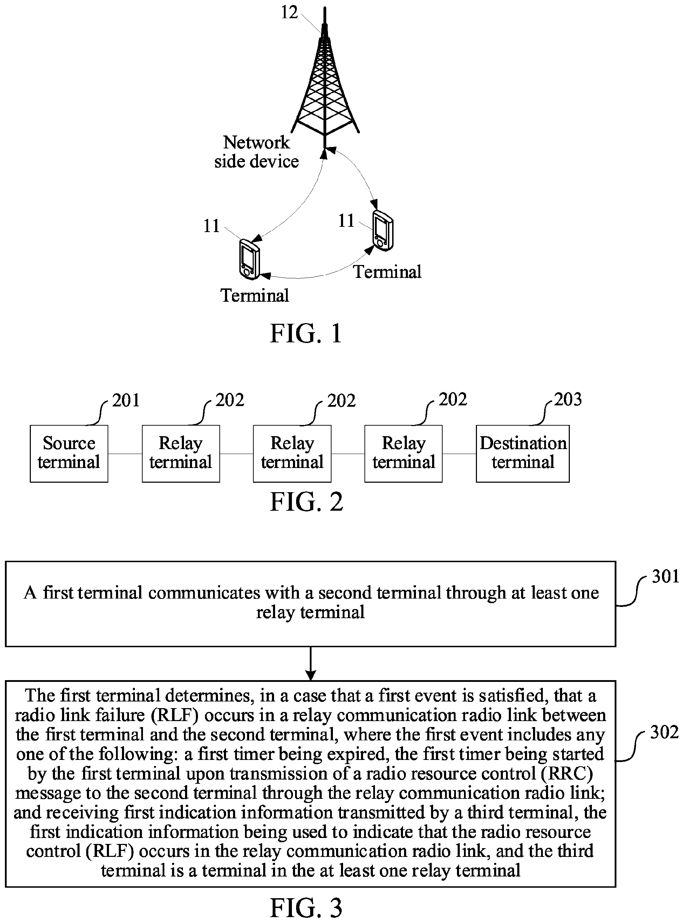

FIG. 1 is a schematic diagram of a wireless communication system applicable to an embodiment of this application. The wireless communication system shown in FIG. 1 includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart bracelet, a smart headphone, smart glasses, smart jewelry (a smart bracelet, a smart bracelet, a smart ring, a smart necklace, a smart anklet, a smart ankle chain, and the like), a smart wristband, smart clothing, and the like. It is to be noted that, there is no limitation to a specific type of the terminal 11 in the embodiments of this application.

The network side device 12 may include an access network device or a core network device. The access network device may alternatively be referred to as a Radio Access Network device, a Radio Access Network (RAN), a Radio Access Network function, or a Radio Access Network unit. The access network device may include a base station, a WLAN access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or another appropriate term in the art. As long as the same technical effect is achieved, the base station is not limited to a specific technology vocabulary. In the embodiments of this application, an introduction is made by only taking the base station in the NR system as an example, and there is no limitation to a specific type of the base station. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), and a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a location manage function (location manage function, LMF), enhanced serving mobile location centre (Enhanced Serving Mobile Location Centre, E-SMLC), a network data analytics function (network data analytics function, NWDAF), and the like. It is to be noted that, in the embodiments of this application, an introduction is made by only taking the core network device in the NR system as an example, and there is no limitation to a specific type of the base station.

One terminal 11 may communicate with the another terminal 11 directly through a sidelink SL. In this case, the one terminal 11 does not need to communicate with the another terminal 11 through a network side device 12. The SL designed in an LTE system may be applied to a specific public safety transaction scenario, for example, may be applied to an emergency communication scenario in a disaster location such as fire and an earthquake, or may be applied to a scenario such as vehicle to everything (V2X) communication, and may be applied to a scenario such as basic safety type communication, autonomous driving, platooning, and sensor expansion.

It is to be noted that, the SL mentioned in this application is not limited to the SL in the LTE system, and may alternatively be an SL in a 5G NR system.

With reference to FIG. 2, an SL-based U2U Relay mechanism is described as follows.

FIG. 2 is a schematic diagram of connections of various terminals in a U2U Relay mechanism according to an embodiment of this application. As shown in FIG. 2, an example in which two terminals communicate with each other through at least one relay terminal is taken as an example. FIG. 2 includes: a source terminal 201, at least one relay terminal 202, and a destination terminal 203.

In a case that the source terminal 201 needs to communicate with the destination terminal 203, there is a situation that the source terminal 201 cannot communicate with the destination terminal 203 directly through an SL due to poor coverage. In this case, the source terminal 201 may communicate with the destination terminal 203 through at least one relay terminal 202. The source terminal 201 may be connected with the relay terminal 202 through an SL/PC5 interface, and the relay terminal 202 may be connected with the destination terminal 203 through an SL/PC5 interface.

Generally, the relay terminal 202 is in an open state. That is, the relay terminal 202 may serve any of the source terminal 201 and the destination terminal 203.

It may be understood that there may be one or more than two relay terminals 202. In a case that the first terminal communicates with the second terminal through two or more relay terminals, the source terminal 201 is connected to the destination terminal 203 through more than two relay terminals 202 for communication. The source terminal 201 may connected with the relay terminal 202 through an SL/PC5 interface, the relay terminal 202 may be connected to another relay terminal 202 through an SL/PC5 interface, and the relay terminal 202 may be connected to the destination terminal 203 through an SL/PC5 interface.

A method for determining a radio link failure according to the embodiments of this application is described in detail below through some embodiments and application scenarios thereof with reference to the accompanying drawings.

A method for determining a radio link failure according to the embodiments of this application may be applied to a first terminal serving as the source terminal 201.

FIG. 3 is a first schematic flowchart of a method for determining a radio link failure according to the embodiments of this embodiment. As shown in FIG. 3, the method includes step 301 and step 302.

Step 301: A first terminal communicates with a second terminal through at least one relay terminal.

Step 302: The first terminal determines, in a case that a first event is satisfied, that a radio link failure (RLF) occurs in a relay communication radio link between the first terminal and the second terminal, where the first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

It is to be noted that, the embodiments of this application may be applied to the source terminal 201 based on the SL-based U2U Relay mechanism. The source terminal 201 may determine, through the embodiments of this application, whether the RLF occurs in the relay communication radio link between the first terminal and the second terminal.

Specifically, the second terminal is the destination terminal 203 in FIG. 2.

Optionally, the RRC message is used to trigger an SL RRC process for configuring a U2U Relay parameter. The first terminal starts a first timer upon transmission of the radio resource control (RRC) message to the second terminal through the relay communication radio link, and stops the first timer upon receiving an RRC response message transmitted back by the second terminal through the relay communication radio link. In a case that the first timer is not expired, information may be bi-directionally transmitted between the first terminal and the second terminal. In this case, it may be considered that no radio link failure (RLF) occurs in the relay communication radio link between the first terminal and the second terminal. In a case that the first timer is expired, the first terminal cannot receive the RRC response message transmitted back by the second terminal through the relay communication radio link. It can be learned, in this case, that information cannot be transmitted bi-directionally between the first terminal and the second terminal, and it may be considered that a radio link failure (RLF) has occurred in the relay communication radio link between the first terminal and the second terminal.

Optionally, the RRC response message transmitted back by the second terminal through the relay communication radio link may include a process success message or a process failure message. The process success message indicates that a radio link between the first terminal and the second terminal is successfully connected, and a configuration corresponding to the radio link is in an available state. The process failure message indicates that a radio link between the first terminal and the second terminal is successfully connected, and a configuration corresponding to the radio link is in an unavailable state. It can be learned that, any one of the foregoing RRC response messages may indicate that the radio link between the first terminal and the second terminal has successfully connected. A difference is that whether a configuration corresponding to the successfully connected radio link is in an available state.

Optionally, the RRC response message transmitted back by the second terminal through the relay communication radio link is reconfiguration procedure information, and specifically includes a reconfiguration process success message or a reconfiguration process failure message.

In the embodiments of this application, the first terminal communicates with the second terminal through the at least one relay terminal. The first terminal determines, in a case that the first event is satisfied, that the radio link failure (RLF) occurs in the relay communication radio link between the first terminal and the second terminal. According to the embodiments of this application, a problem that a current SL RLF mechanism cannot determine whether a radio link fails to establish between UEs under a U2U Relay mechanism can be solved, and a service is enabled to be transmitted between the UEs on a premise that a radio link condition is good, thereby ensuring service transmission quality between two UEs under the U2U Relay mechanism and improving communication robustness.

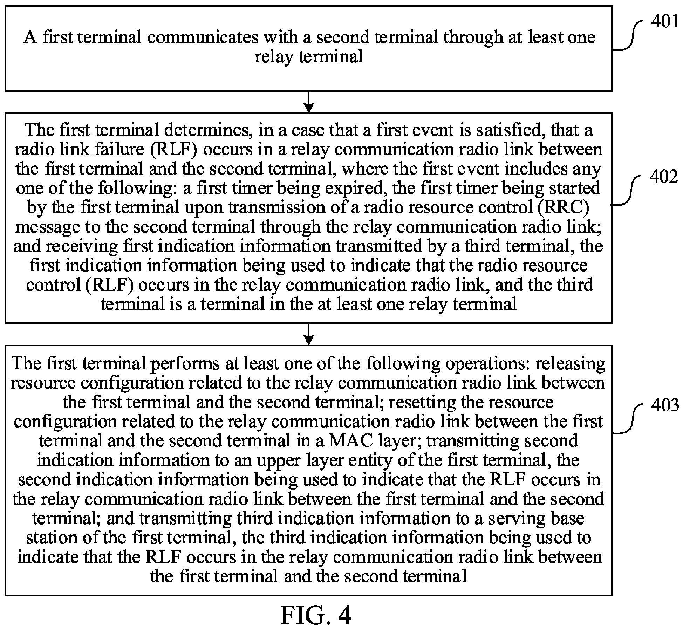

Optionally, FIG. 4 is a second schematic flowchart of a method for determining a radio link failure according to an embodiment of this application. As shown in FIG. 4, step 401 and step 402 are substantially the same as step 301 and step 302. Details are not described herein again. A difference is that the method further includes step 403.

Step 401: A first terminal communicates with a second terminal through at least one relay terminal.

Step 402: The first terminal determines, in a case that a first event is satisfied, that a radio link failure (RLF) occurs in a relay communication radio link between the first terminal and the second terminal, where the first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

Step 403: The first terminal performs at least one of the following operations: releasing a resource configuration related to the relay communication radio link between the first terminal and the second terminal; resetting the resource configuration related to the relay communication radio link between the first terminal and the second terminal in a MAC layer; transmitting second indication information to an upper layer entity of the first terminal, the second indication information being used to indicate that the RLF occurs in the relay communication radio link between the first terminal and the second terminal; and transmitting third indication information to a serving base station of the first terminal, the third indication information being used to indicate that the RLF occurs in the relay communication radio link between the first terminal and the second terminal.

Optionally, the resource configuration related to the relay communication radio link between the first terminal and the second terminal includes at least one of the following:
(1) Radio bearer configuration between the first terminal and the second terminal.
(2) Peer-to-peer packet data convergence protocol (Packet Data Convergence Protocol, PDCP) entity configuration between the first terminal and the second terminal.
(3) Peer-to-peer sidelink relay adaptation protocol (Sidelink Relay Adaptation Protocol, SRAP) entity configuration between the first terminal and the second terminal.

The SRAP entity configuration includes at least one of the following:
(1) L2 ID of the first terminal, the at least one relay terminal, and the second terminal.
(2) An RLC channel configuration between the first terminal and a next-hop terminal of the first terminal.
(3) A configuration of a mapping relationship between the radio bearer configuration between the first terminal and the second terminal and the RLC channel configuration between the first terminal and the next-hop terminal of the first terminal.

Optionally, an upper layer entity of the first terminal is a general term for an upper layer entity above the RRC layer in the first terminal, and may specifically include: a non-access stratum layer (NAS), a proximity service layer (ProSe layer), and an application layer.

In the embodiments of this application, after determining that the RLF has occurred in the relay communication radio link between the first terminal and the second terminal, the first terminal performs corresponding processing on the relay communication radio link, for example, transmits indication information to the upper layer entity of the first terminal, or transmits indication information to the serving base station of the first terminal, so that the upper layer entity or the serving base station can collect information related to the RLF and perform corresponding processing, and then communication robustness can be improved.

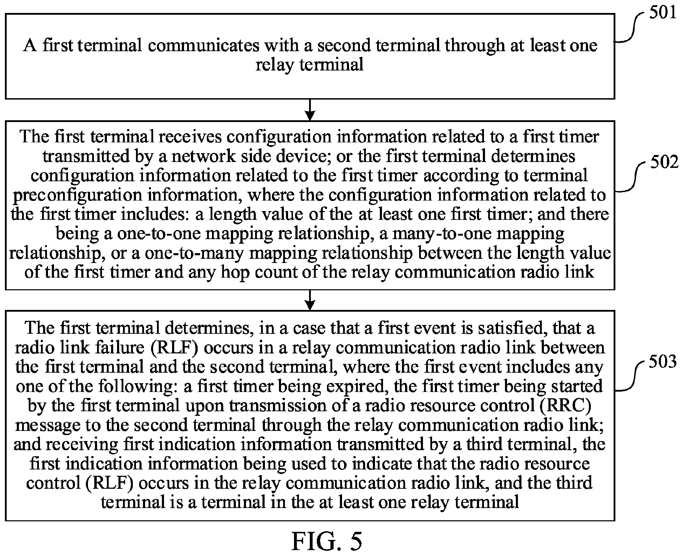

Optionally, FIG. 5 is a third schematic flowchart of a method for determining a radio link failure according to an embodiment of this application. As shown in FIG. 5, step 501 and step 503 are substantially the same as step 301 and step 302. Details are not described herein again. A difference is that the method further includes step 502.

Step 501: A first terminal communicates with a second terminal through at least one relay terminal.

Step 502: The first terminal receives configuration information related to a first timer transmitted by a network side device; or the first terminal determines configuration information related to the first timer according to terminal preconfiguration information, where the configuration information related to the first timer includes: a length value of the at least one first timer; and there being a one-to-one mapping relationship, a many-to-one mapping relationship, or a one-to-many mapping relationship between the length value of the first timer and any hop count of the relay communication radio link.

Step 503: The first terminal determines, in a case that a first event is satisfied, that a radio link failure (RLF) occurs in a relay communication radio link between the first terminal and the second terminal, where the first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

Optionally, the first timer may reuse a T400 timer set in the first terminal, or a new timer T4xx may be set as the first timer.

Optionally, the length value of the first timer is set to be dedicated to a scenario of U2U Relay communication.

Optionally, in a case that the first terminal communicates with the second terminal through one relay terminal, the first timer corresponds to one length value.

Optionally, in a case that the first terminal communicates with the second terminal through two or more relay terminals, there is a one-to-one mapping relationship, a many-to-one mapping relationship, or a one-to-many mapping relationship between the length value of the first timer and any hop count of the relay communication radio link. An example in which the first terminal communicates with the second terminal through N relay terminals is taken for description. N is an integer greater than 1.

In a case that the first terminal communicates with the second terminal through N relay terminals, a network side device may configure a timer length value list according to the hop count. For example, content in the list includes: in a case that the hop count is 2, the length value of the corresponding first timer is T2; in a case that the hop count is 3, the length value of the corresponding first timer is T3; and in a case that the hop count is N, the length value of the corresponding first timer is TN. Values of T2, T3,..., and TN may be the same or different.

Optionally, cases of different hop counts supporting the radio link between the first terminal and the second terminal may be distinguished according to the length value corresponding to the first timer. For example, in a case that the length value of the first timer is T2, it may be determined that the hop count supporting the radio link between the first terminal and the second terminal is 2; in a case that the length value of the first timer is T3, it may be determined that the hop count supporting the radio link between the first terminal and the second terminal is 3; and in a case that the length value of the first timer is TN, it may be determined that the hop count supporting the radio link between the first terminal and the second terminal is N.

Optionally, whether the radio link between the first terminal and the second terminal supports relay communication may further be distinguished according to the length value corresponding to the first timer. For example, in a case that the length value of the first timer is a, it may be determined that the radio link between the first terminal and the second terminal supports relay-based communication. In a case that the length value of the first timer is b, it may be determined that the radio link between the first terminal and the second terminal does not support relay-based communication.

In the embodiments of this application, the first terminal receives the configuration information related to the first timer transmitted by the network side device, and sets the length value of the first timer according to the configuration information to adapt to relay communication scenarios with different hop counts.

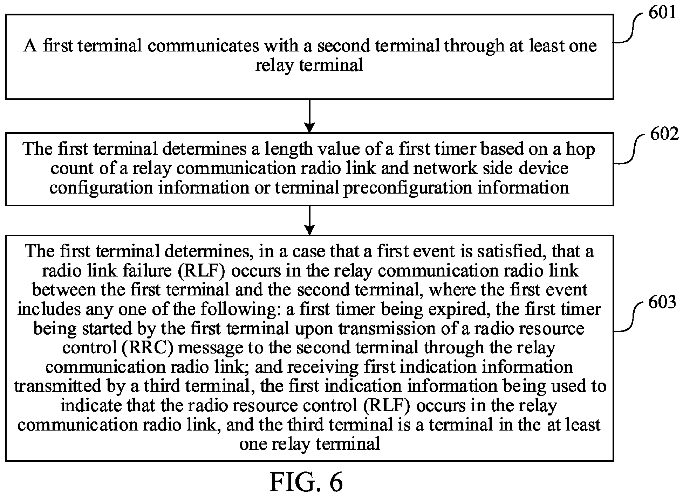

Optionally, FIG. 6 is a fourth flowchart of a method for determining a radio link failure according to an embodiment of this application. As shown in FIG. 6, step 601 and step 603 are substantially the same as step 301 and step 302. Details are not described herein again. A difference is that the method further includes step 602.

Step 601: A first terminal communicates with a second terminal through at least one relay terminal.

Step 602: The first terminal determines a length value of a first timer based on a hop count of a relay communication radio link and network side device configuration information or terminal preconfiguration information.

Step 603: The first terminal determines, in a case that a first event is satisfied, that a radio link failure (RLF) occurs in the relay communication radio link between the first terminal and the second terminal, where the first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

Optionally, the first indication information is carried in at least one of the following:
(1) A sidelink relay adaptation layer protocol (SRAP) control protocol data unit (PDU).
(2) A PC5 RRC message.

Optionally, the first indication information may reuse information in a related art, for example, may reuse UEAssistanceInformationSidelink information, or the first indication information may be a new piece of information.

Optionally, the first indication information includes at least one of the following:
(1) A failure cause corresponding to the RLF.
(2) Identification information corresponding to the RLF.

Optionally, the failure cause corresponding to the RLF includes at least one of the following:
(1) An SL RLC entity corresponding to the third terminal reaches a maximum number of retransmissions.
(2) A T400 timer of the third terminal is expired.
(3) An SL RLC entity corresponding to the third terminal reaches a maximum number of consecutive hybrid automatic repeat request (HARQ) discontinuous transmissions (DTX).
(4) An integrity protection failure is detected by an SL packet data convergence protocol (PDCP) entity corresponding to the third terminal.

Optionally, the identification information corresponding to the RLF includes at least one of the following:
(1) At least one Destination layer 2 L2 identifier (ID).
(2) An ID of at least one SL radio link control RLC channel.
(3) An ID of at least one SL radio bearer.

Optionally, a Destination L2 ID is included in a terminal ID, and the terminal ID may further include a local identity and a Source L2 ID. The Destination L2 ID may be carried in a header format of the PC5 SRAP layer or the MAC layer for transmission, or, carried in PC5 RRC message content for transmission.

Optionally, in a case that the first terminal communicates with the second terminal through one relay terminal, the Destination L2 ID corresponds to the second terminal, and is used to identify the second terminal. In a case that the first terminal communicates with the second terminal through two or more relay terminals, the Destination L2 ID may correspond to the second terminal for identifying the second terminal, or may correspond to the third terminal and/or a next-hop terminal of the third terminal where the RLF occurs for identifying the third terminal and/or the next-hop terminal of the third terminal.

Optionally, the ID of the RLC channel is used to identify an RLC channel in which the RLF occurs between the first terminal and the second terminal.

Optionally, the SL radio bearer ID is used to identify a relay radio bearer between the first terminal and the second terminal. There is a mapping relationship between the relay radio bearer and the RLC channel where the RLF occurs.

In the embodiments of this application, the first terminal determines a length value of the first timer based on a hop count of the relay communication radio link and the network side device configuration information or the terminal preconfiguration information, so as to adapt to relay communication scenarios with different hop counts.

It is to be noted that, the method for determining a radio link failure according to an embodiment of this application may be applied to the third terminal serving as a relay terminal 202.

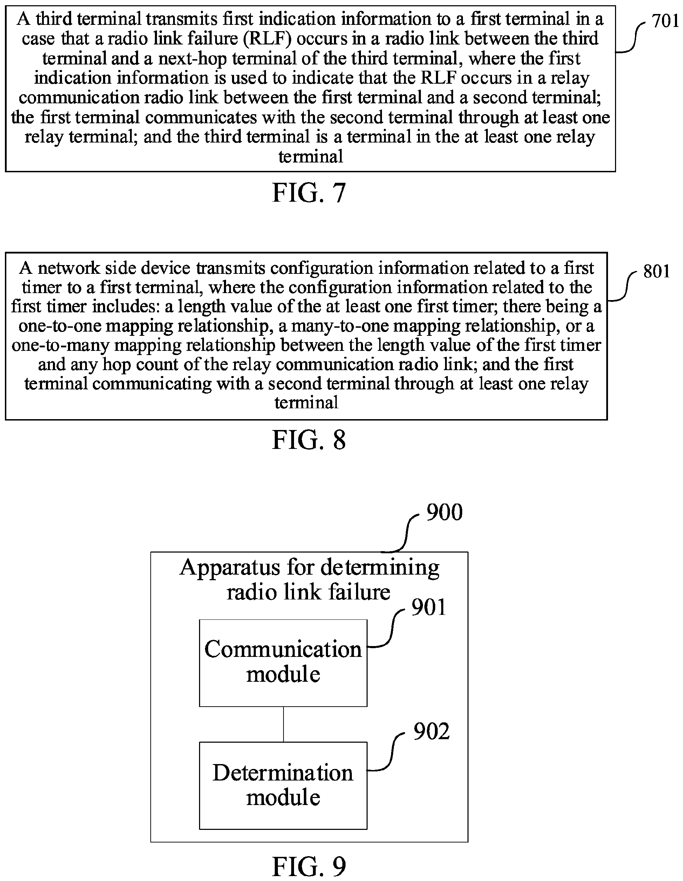

FIG. 7 is a fifth schematic flowchart of a method for determining a radio link failure according to the embodiments of this embodiment. As shown in FIG. 7, the method includes step 701.

Step 701: A third terminal transmits first indication information to a first terminal in a case that a radio link failure (RLF) occurs in a radio link between the third terminal and a next-hop terminal of the third terminal. The first indication information is used to indicate that the RLF occurs in a relay communication radio link between the first terminal and a second terminal; the first terminal communicates with the second terminal through at least one relay terminal; and the third terminal is a terminal in the at least one relay terminal.

Optionally, it is assumed that the first terminal is connected to the second terminal through a relay terminal 1, a relay terminal 2, a relay terminal 3, a relay terminal 4,..., and a relay terminal N in sequence, any terminal transmits, in a case that it is determined that an RLF has occurred in a radio link between the relay terminal and a next-hop terminal of the relay terminal, the first indication information to a previous-hop terminal of the relay terminal. After receiving the first indication information, the previous-hop terminal of the relay terminal continues to transmit the first indication information to a further previous-hop terminal of the previous-hop terminal until the first indication information is transmitted to the first terminal.

For example, when the relay terminal 3 determines that the RLF has occurred in the radio link between the relay terminal 3 and the relay terminal 4, the relay terminal 3 transmits the first indication information to the relay terminal 2, the relay terminal 2 continues to transmit the first indication information to the relay terminal 1, and the relay terminal 1 finally transmits the first indication information to the first terminal.

Optionally, the first indication information is carried in at least one of the following:
(1) A sidelink relay adaptation layer protocol (SRAP) control protocol data unit (PDU).
(2) A PC5 RRC message.

Optionally, the first indication information includes at least one of the following:
(1) A failure cause corresponding to the RLF.
(2) Identification information corresponding to the RLF.

Optionally, the failure cause corresponding to the RLF includes at least one of the following:
(1) An SL RLC entity corresponding to the third terminal reaches a maximum number of retransmissions.
(2) A T400 timer of the third terminal is expired.
(3) An SL RLC entity corresponding to the third terminal reaches a maximum number of consecutive hybrid automatic repeat request (HARQ) discontinuous transmissions (DTX).
(4) An integrity protection failure is detected by an SL packet data convergence protocol (PDCP) entity corresponding to the third terminal.

Optionally, identification information of a resource corresponding to the RLF includes at least one of the following:
(1) An identifier (ID) of at least one Destination layer 2 L2.
(2) An ID of at least one SL radio link control RLC channel.
(3) An ID of at least one SL radio bearer.

In the embodiments of this application, the third terminal transmits, in a case that it is determined that the radio link failure (RLF) occurs between in the radio link between the third terminal and a next-hop terminal of the third terminal, indication information for indicating that the RLF occurs in the radio link between the first terminal and the second terminal to the first terminal, so that a problem that a current SL RLF mechanism cannot determine whether a radio link fails to establish between UEs under a U2U Relay mechanism is solved, a service is enabled to be transmitted between the UEs on a premise that a radio link condition is good, then service transmission quality between two UEs under the U2U Relay mechanism is ensured, and communication robustness is improved.

It is to be noted that, the method for determining a radio link failure according to the embodiments of the application may be applied to a network side device.

FIG. 8 is a sixth schematic flowchart of a method for determining a radio link failure according to an embodiment of this application. As shown in FIG. 8, the method includes step 801.

Step 801: A network side device transmits configuration information related to a first timer to a first terminal, where the configuration information related to the first timer includes: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

In the embodiments of this application, the network side device transmits the configuration information related to the first timer to the first terminal, so that the first terminal sets the length value of the first timer according to the configuration information to adapt to relay communication scenarios with different hop counts.

It is to be noted that, for related implementation details in the embodiment corresponding to FIG. 7 and the method embodiment corresponding to FIG. 8, refer to the embodiments corresponding to FIG. 3 to FIG. 6. To avoid repetition, details are not described herein again.

The method for determining a radio link failure according to the embodiments of this application may be performed by an apparatus for determining a radio link failure. In the embodiments of this application, an example in which the apparatus for determining a radio link failure performs the method for determining a radio link failure is taken to describe the apparatus for determining a radio link failure according to the embodiments of this application.

FIG. 9 is a first schematic structural diagram of an apparatus for determining a radio link failure according to an embodiment of this application. As shown in FIG. 9, the apparatus 900 for determining a radio link failure is applied to a first terminal, and includes:
a communication module 901, configured to communicate with a second terminal through at least one relay terminal; and
a determination module 902, configured to determine, in a case that a first event is satisfied, that a radio link failure (RLF) occurs in a relay communication radio link between a first terminal and the second terminal. The first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

An apparatus for determining a radio link failure according to the embodiments of this application communicates with the second terminal through the at least one relay terminal, and determines, in a case that the first event is satisfied, that the radio link failure (RLF) occurs in the relay communication radio link between the first terminal and the second terminal. According to the embodiments of this application, a problem that a current SL RLF mechanism cannot determine whether a radio link fails to establish between UEs under a U2U Relay mechanism can be solved, and a service is enabled to be transmitted between the UEs on a premise that a radio link condition is good, thereby ensuring service transmission quality between two UEs under the U2U Relay mechanism and improving communication robustness.

Optionally, the apparatus 900 for determining a radio link failure further includes:
a processing module, configured to perform at least one of the following operations:
releasing a resource configuration related to the relay communication radio link between the first terminal and the second terminal;
resetting the resource configuration related to the relay communication radio link between the first terminal and the second terminal in a MAC layer;
transmitting second indication information to an upper layer entity of the first terminal, the second indication information being used to indicate that the RLF occurs in the relay communication radio link between the first terminal and the second terminal; and
transmitting third indication information to a serving base station of the first terminal, the third indication information being used to indicate that the RLF occurs in the relay communication radio link between the first terminal and the second terminal.

Optionally, the determination module 902 is further configured to:
receive configuration information related to a first timer transmitted by a network side device; or determine, by the first terminal, configuration information related to the first timer according to terminal preconfiguration information. The configuration information related to the first timer includes: a length value of the at least one first timer; and there being a one-to-one mapping relationship, a many-to-one mapping relationship, or a one-to-many mapping relationship between the length value of the first timer and any hop count of the relay communication radio link.

Optionally, the determination module 902 is further configured to:
determine the length value of the first timer based on a hop count of the relay communication radio link and network side device configuration information or the terminal preconfiguration information.

Optionally, the first indication information is carried in at least one of the following:
(1) A sidelink relay adaptation layer protocol (SRAP) control protocol data unit (PDU).
(2) A PC5 RRC message.

Optionally, the first indication information includes at least one of the following:
(1) A failure cause corresponding to the RLF.
(2) Identification information corresponding to the RLF.

Optionally, the identification information corresponding to the RLF includes at least one of the following:
(1) An identifier (ID) of at least one Destination layer 2 L2.
(2) An ID of at least one SL radio link control RLC channel.
(3) An ID of at least one SL radio bearer.

Optionally, the failure cause corresponding to the RLF includes at least one of the following:
(1) An SL RLC entity corresponding to the third terminal reaches a maximum number of retransmissions.
(2) A T400 timer of the third terminal is expired.
(3) An SL RLC entity corresponding to the third terminal reaches a maximum number of consecutive hybrid automatic repeat request (HARQ) discontinuous transmissions (DTX).
(4) An integrity protection failure is detected by an SL packet data convergence protocol (PDCP) entity corresponding to the third terminal.

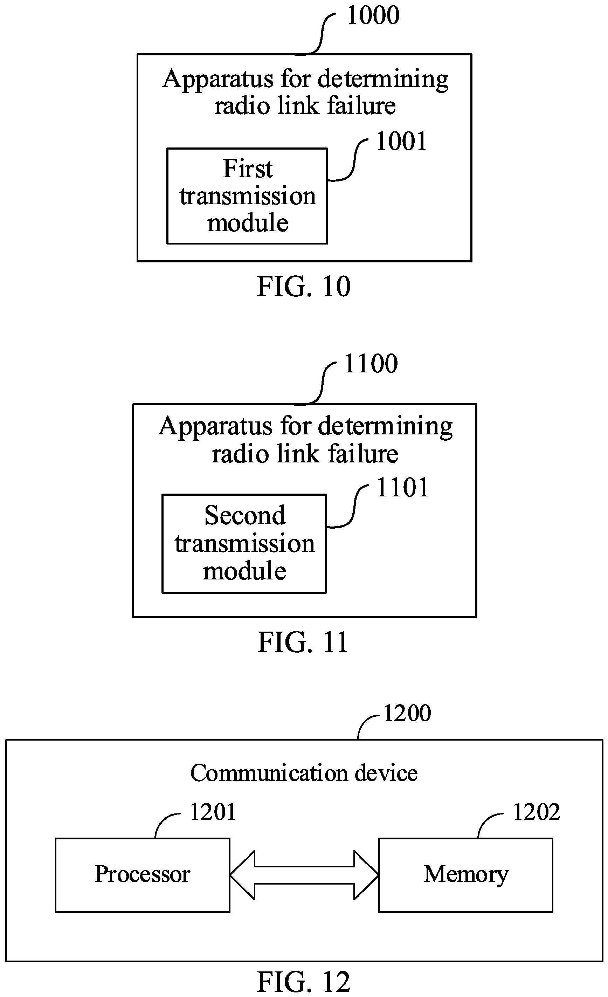

FIG. 10 is a second schematic structural diagram of an apparatus for determining a radio link failure according to an embodiment of this application. As shown in FIG. 10, the apparatus 1000 for determining a radio link failure is applied to a third terminal, and includes:
a first transmission module 1001, configured to transmit first indication information to a first terminal in a case that a radio link failure (RLF) occurs in a radio link between a third terminal and a next-hop terminal of the third terminal, where the first indication information is used to indicate that the RLF occurs in a relay communication radio link between the first terminal and a second terminal; the first terminal communicates with the second terminal through at least one relay terminal; and the third terminal is a terminal in the at least one relay terminal.

In the embodiments of this application, the third terminal transmits, in a case that it is determined that the radio link failure (RLF) occurs between in the radio link between the third terminal and a next-hop terminal of the third terminal, indication information for indicating that the RLF occurs in the radio link between the first terminal and the second terminal to the first terminal, so that a problem that a current SL RLF mechanism cannot determine whether a radio link fails to establish between UEs under a U2U Relay mechanism is solved, a service is enabled to be transmitted between the UEs on a premise that a radio link condition is good, then service transmission quality between two UEs under the U2U Relay mechanism is ensured, and communication robustness is improved.

Optionally, the first indication information is carried in at least one of the following:
(1) A sidelink relay adaptation layer protocol (SRAP) control protocol data unit (PDU).
(2) A PC5 RRC message.

Optionally, the first indication information includes at least one of the following:
(1) A failure cause corresponding to the RLF.
(2) Identification information corresponding to the RLF.

Optionally, the identification information corresponding to the RLF includes at least one of the following:
(1) An identifier (ID) of at least one Destination layer 2 L2.
(2) An ID of at least one SL radio link control RLC channel.
(3) An ID of at least one SL radio bearer.

Optionally, the failure cause corresponding to the RLF includes at least one of the following:
(1) An SL RLC entity corresponding to the third terminal reaches a maximum number of retransmissions.
(2) A T400 timer of the third terminal is expired.
(3) An SL RLC entity corresponding to the third terminal reaches a maximum number of consecutive hybrid automatic repeat request (HARQ) discontinuous transmissions (DTX).
(4) An integrity protection failure is detected by an SL packet data convergence protocol (PDCP) entity corresponding to the third terminal.

FIG. 11 is a third schematic structural diagram of an apparatus for determining a radio link failure according to an embodiment of this application. As shown in FIG. 11, the apparatus 1100 for determining a radio link failure is applied to a network side device, and includes:
a second transmission module 1101, configured to transmit configuration information related to a first timer to a first terminal, where the configuration information related to the first timer includes: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

In the embodiments of this application, the network side device transmits the configuration information related to the first timer to the first terminal, so that the first terminal sets the length value of the first timer according to the configuration information to adapt to relay communication scenarios with different hop counts.

The apparatus for determining a radio link failure in the embodiments of this application may be an electronic device, for example, an electronic device having an operating system, or may be a component in the electronic device, for example, an integrated circuit or a chip. The electronic device may be a terminal or a device other than the terminal. For example, the electronic device may be a mobile phone, a tablet computer, a notebook computer, a palm computer, a vehicle electronic device, a mobile Internet device (Mobile Internet Device, MID), an augmented reality (augmented reality, AR)/virtual reality (virtual reality, VR), a robot, a wearable device, an ultra-mobile personal computer (ultra-mobile personal computer, UMPC), a netbook, a personal digital assistant (personal digital assistant, PDA), or the like, and may alternatively be a server, a network attached storage (Network Attached Storage, NAS), a personal computer (personal computer, PC), a television (television, TV), a teller machine, or an automated machine. This is not specifically limited in the embodiments of this application. For example, the terminal may include, but is not limited to, types of the terminal 11 listed above. Another device may be a server, a NAS, or the like. This is not specifically limited in the embodiments of this application.

The apparatus for determining a radio link failure in the embodiments of this application may be an apparatus having an operating system. The operating system may be an Android operating system, may be an ios operating system, or may be another possible operating system. This is not specifically limited in the embodiments of this application.

The apparatus for determining a radio link failure in the embodiments of this application can implement all processes implemented by the method embodiments corresponding to FIG. 1 to FIG. 8 and achieve the same technical effects. To avoid repetition, details are not described herein again.

FIG. 12 is a schematic structural diagram of a communication device according to an embodiment of this application. As shown in FIG. 12, the communication device 1200 includes a processor 1201 and a memory 1202. The memory 1202 stores a program or instructions executable on the processor 1201. For example, when the communication device 1200 is a first terminal and when the program or the instructions are executed by the processor 1201, various steps in an embodiment of a method for determining a radio link failure corresponding to the foregoing first terminal are implemented, and the same technical effects can be achieved. When the communication device 1200 is a third terminal and when the program or the instructions are executed by the processor 1201, various steps in an embodiment of a method for determining a radio link failure corresponding to the third terminal described above are implemented, and the same technical effects can be achieved. When the communication device 1200 is a network side device and when the program or the instructions are executed by the processor 1201, various steps in an embodiment of a method for determining a radio link failure corresponding to the network side device described above are implemented, and the same technical effects can be achieved. To avoid repetition, details are not described herein again.

The embodiments of this application further provide a first terminal, including a processor and a communication interface.

The communication interface is configured to: communicate with a second terminal through at least one relay terminal.

The processor is configured to: determine, in a case that a first event is satisfied, that a radio link failure (RLF) occurs in a relay communication radio link between the first terminal and the second terminal. The first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal. This terminal embodiment corresponds to the foregoing first terminal side method embodiment. Various implementation processes and implementations of the foregoing method embodiments may all be applied to the first terminal embodiment, and the same technical effects can be achieved.

The embodiments of this application further provide a third terminal, including a processor and a communication interface.

The communication interface is configured to transmit first indication information to a first terminal in a case that a radio link failure (RLF) occurs in a radio link between the third terminal and a next-hop terminal of the third terminal. The first indication information is used to indicate that the RLF occurs in a relay communication radio link between the first terminal and a second terminal; the first terminal communicates with the second terminal through at least one relay terminal; and the third terminal is a terminal in the at least one relay terminal. This terminal embodiment corresponds to the foregoing third terminal side method embodiment. Various implementation processes and implementations of the foregoing method embodiments may all be applied to the third terminal embodiment, and the same technical effects can be achieved.

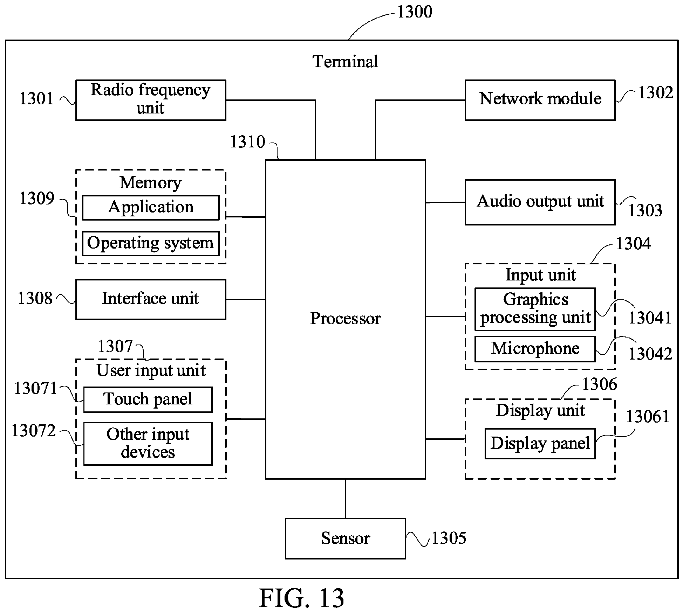

FIG. 13 is a schematic structural diagram of a terminal according to an embodiment of this application. As shown in FIG. 13, a terminal 1300 includes, but is not limited to: at least part components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Those skilled in the art may understand that the terminal 1300 may further include a power supply (for example, a battery) for supplying power to the components. The power supply may be logically connected to the processor 1310 through a power management system, thereby realizing functions such as charging, discharging, and power consumption management through the power management system. A terminal structure shown in FIG. 13 does not constitute a limitation on the terminal, and the terminal may include more or fewer components than shown, or combine some components, or have different component arrangements. Details are not described herein again.

It is to be understood that, in the embodiments of this application, the input unit 1304 may include a graphics processing unit (Graphics Processing Unit, GPU) 13041 and a microphone 13042. The graphics processing unit 13041 performs processing on image data of a static picture or a video that is obtained by an image acquisition device (for example, a camera) in a video acquisition mode or an image acquisition mode. The display unit 1306 may include a display panel 13061. The display panel 13061 may be configured in a form of a liquid crystal display, an organic light-emitting diode, or the like. The user input unit 1307 includes at least one of a touch panel 13071 and another input device 13072. The touch panel 13071 is alternatively referred to as a touchscreen. The touch panel 13071 may include two parts: a touch detection apparatus and a touch controller. The another input device 13072 may include, but is not limited to, a physical keyboard, a functional key (such as a volume control key or a switch key), a track ball, a mouse, and a joystick. Details are not described herein again.

In the embodiments of this application, after receiving downlink data from a network side device, the radio frequency unit 1301 may transmit the downlink data to the processor 1310 for processing. In addition, the radio frequency unit 1301 may transmit uplink data to the network side device. Generally, the radio frequency unit 1301 includes, but is not limited to, an antenna, an amplifier, a transceiver, a coupler, a low noise amplifier, a duplexer, and the like.

The memory 1309 may be configured to store a software program or instructions and various data. The memory 1309 may mainly include a program storage area for storing the program or the instructions and a data storage area for storing the data. The first storage area may store an operating system, an application or instructions required by at least one function (for example, a sound playback function and an image display function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 1309 in the embodiments of this application includes, but is not limited to, these and any other suitable types of memories.

The processor 1310 may include one or more processing units. Optionally, the processor 1310 integrates an application processor and a modulation and demodulation processor. The application processor mainly processes operations related to an operating system, a user interface, an application program, and the like. The modulation and demodulation processor mainly processes a wireless communication signal, for example, a baseband processor. It may be understood that, the foregoing modulation and demodulation processor may alternatively not be integrated into the processor 1310.

For example, when the terminal 1300 is a first terminal, the radio frequency unit 1301 is configured to communicate with a second terminal through at least one relay terminal. The processor 1310 is configured to determine, in a case that a first event is satisfied, that a radio link failure (RLF) occurs in a relay communication radio link between the first terminal and the second terminal. The first event includes any one of the following: a first timer being expired, the first timer being started by the first terminal upon transmission of a radio resource control (RRC) message to the second terminal through the relay communication radio link; and receiving first indication information transmitted by a third terminal, the first indication information being used to indicate that the radio resource control (RLF) occurs in the relay communication radio link, and the third terminal is a terminal in the at least one relay terminal.

The first terminal according to the embodiments of this application communicates with the second terminal through at least one relay terminal. The first terminal determines, in a case that the first event is satisfied, that the radio link failure (RLF) occurs in the relay communication radio link between the first terminal and the second terminal. According to the embodiments of this application, a problem that a current SL RLF mechanism cannot determine whether a radio link fails to establish between UEs under a U2U Relay mechanism can be solved, and a service is enabled to be transmitted between the UEs on a premise that a radio link condition is good, thereby ensuring service transmission quality between two UEs under the U2U Relay mechanism and improving communication robustness.

For another example, when the terminal 1300 is a third terminal, the radio frequency unit 1301 is configured to transmit first indication information to a first terminal in a case that a radio link failure (RLF) occurs in a radio link between the third terminal and a next-hop terminal of the third terminal. The first indication information is used to indicate that the RLF occurs in a relay communication radio link between the first terminal and a second terminal; the first terminal communicates with the second terminal through at least one relay terminal; and the third terminal is a terminal in the at least one relay terminal.

The embodiments of this application further provide a network side device, including a processor and a communication interface.

The communication interface is configured to transmit configuration information related to a first timer to a first terminal. The configuration information related to the first timer includes: a length value of the at least one first timer; there being a one-to-one mapping relationship, a many-to-one mapping relationship, or a one-to-many mapping relationship between the length value of the first timer and any hop count of the relay communication radio link; and the first terminal communicating with the second terminal through at least one relay terminal. This network side device embodiment corresponds to the foregoing network side device method embodiments. Various implementation processes and implementations of the foregoing method embodiments may all be applied to the network side device embodiments, and the same technical effects can be achieved.

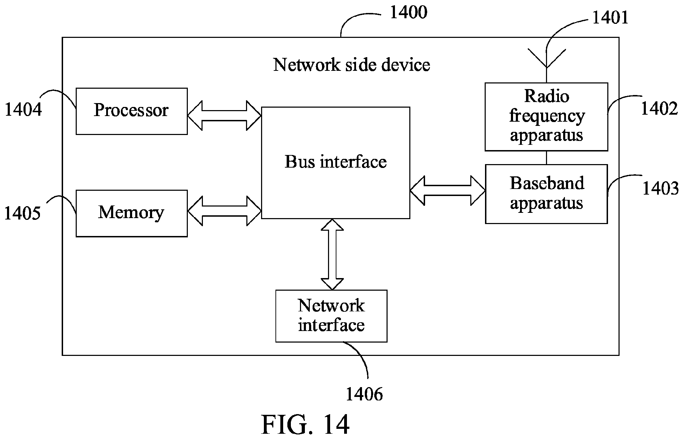

FIG. 14 is a schematic structural diagram of a network side device according to an embodiment of this application. As shown in FIG. 14, a network side device 1400 includes: an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and transmits the received information to the baseband apparatus 1403 for processing. In a downlink direction, the baseband apparatus 1403 processes to-be-transmitted information, and transmits processed information to the radio frequency apparatus 1402. The radio frequency apparatus 1402 processes received information and transmits processed information through the antenna 1401.

The method performed by the network side device in the foregoing embodiments may be implemented in the baseband apparatus 1403. The baseband apparatus 1403 includes a baseband processor.

The baseband apparatus 1403 may include, for example, at least one baseband board. A plurality of chips are disposed on the baseband board. As shown in FIG. 14, one chip is, for example, a baseband processor, and is connected to the memory 1405 through a bus interface to invoke a program in the memory 1405 to perform operations of a network device shown in the foregoing method embodiments.

The network side device may further include a network interface 1406. The interface is, for example, a common public radio interface (CPRI).

Specifically, The network side device 1400 in the embodiments of this application further includes: instructions or a program stored in the memory 1405 and executable on the processor 1404. The processor 1404 invokes the instructions or the program in the memory 1405 to perform the foregoing method for determining a radio link failure, and achieve the same technical effect. To avoid repetition, details are not described herein again.

An embodiment of this application further provides a system for determining a radio link failure, including: a first terminal, a second terminal, a third terminal, and a network side device. The first terminal may be configured to perform steps of the foregoing method for determining a radio link failure on a first terminal side. The second terminal may perform steps of the foregoing method for determining a radio link failure. The third terminal may be configured to perform steps of the foregoing method for determining a radio link failure on a third terminal side. The network side device may be configured to perform steps of the foregoing method for determining a radio link failure of the network side device.

The embodiments of this application further provide a readable storage medium. The readable storage medium may be volatile or non-volatile. A program or instructions are stored in the readable storage medium. The program or the instructions implement various processes of the foregoing embodiments of the method for determining a radio link failure and achieve the same technical effects when executed by a processor. To avoid repetition, details are not described herein again.

The processor is a processor in a terminal in the foregoing embodiments. The readable storage medium includes a computer-readable storage medium, such as a computer read-only memory (ROM), a random access memory (RAM), a magnetic disk, an optical disc, or the like.

The embodiments of this application further provide a chip. The chip includes a processor and a communication interface. The communication interface is coupled to the processor. The processor is configured to run a program or instructions to implement various processes in the foregoing embodiments of the method for determining a radio link failure. To avoid repetition, details are not described herein again.

It is to be understood that the chip mentioned in the embodiments of this application may alternatively be referred to as a system-level chip, a system chip, a chip system, a system on a chip, or the like.

The embodiments of this application further provide a computer program/a program product. The computer program/program product is stored in a storage medium. The computer program/program product is executed by at least one processor to implement various processes of the foregoing embodiments of the method for determining a radio link failure and can achieve the same technical effects. To avoid repetition, details are not described herein again.

It is to be noted that, terms "include", "comprise", or any other variants thereof herein are intended to cover nonexclusive inclusions, so that a process, a method, an article, or an apparatus including a series of elements not only includes those elements but also includes other elements which are not clearly listed or further includes intrinsic elements of the process, the method, the article, or the apparatus. Without more restrictions, elements defined by a statement "include a/an..." do not exclude the existence of additional identical elements in the process, the method, the article, or the apparatus that includes the elements. In addition, it is to be pointed out that the scope of the method and apparatus in the implementations of this application is not limited to performing functions in the order shown or discussed, and may further include performing functions in a substantially simultaneous manner or in a reverse order according to the functions involved. For example, the described methods may be performed in an order different from the described order, and various steps may be added, omitted, or combined. In addition, features described with reference to some examples may be combined in other examples.

According to the description of the above implementations, those who skilled in the art can clearly understand that the method in the above embodiments may be implemented by software in addition to a necessary universal hardware platform or by hardware only. In most cases, the former is a more preferred implementation. Based on such an understanding, the technical solutions of this application essentially or a part thereof that contributes to art technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods the embodiments of this application.

The embodiments of this application are described above with reference to the accompanying drawings, but this application is not limited to above specific implementations. The above specific implementations are merely illustrative rather than restrictive. Inspired by this application, those who skilled in the art may still make a plurality of forms without departing from the essence of this application and the scope of protection of the claims, which all fall within the protection of this application.

## Claims

1. A method for determining a radio link failure, comprising:
communicating, by a first terminal, with a second terminal through at least one relay terminal; and
determining, by the first terminal in a case that a first event is satisfied, that a radio link failure (RLF) occurs in a relay communication radio link between the first terminal and the second terminal, wherein
the first event comprises any one of the following:
a first timer being expired, the first timer being started by the first terminal upon transmission of a radio resource control (RRC) message to the second terminal through the relay communication radio link; and
receiving first indication information transmitted by a third terminal, the first indication information being used to indicate that the radio resource control (RLF) occurs in the relay communication radio link, and the third terminal is a terminal in the at least one relay terminal.

2. The method for determining a radio link failure according to claim 1, wherein after the determining that a radio link failure (RLF) occurs in a relay communication radio link between the first terminal and the second terminal, the method further comprises:
performing, by the first terminal, at least one of the following operations:
releasing a resource configuration related to the relay communication radio link between the first terminal and the second terminal;
resetting the resource configuration related to the relay communication radio link between the first terminal and the second terminal in a MAC layer;
transmitting second indication information to an upper layer entity of the first terminal, the second indication information being used to indicate that the RLF occurs in the relay communication radio link between the first terminal and the second terminal; and
transmitting third indication information to a serving base station of the first terminal, the third indication information being used to indicate that the RLF occurs in the relay communication radio link between the first terminal and the second terminal.

3. The method for determining a radio link failure according to claim 1 or 2, wherein before the determining, by the first terminal in a case that a first event is satisfied, that a radio link failure (RLF) occurs in a relay communication radio link between the first terminal and the second terminal, the method further comprises:
receiving, by the first terminal, configuration information related to the first timer transmitted by a network side device; or determining, by the first terminal, configuration information related to the first timer according to terminal preconfiguration information, wherein the configuration information related to the first timer comprises: a length value of the at least one first timer; and there being a one-to-one mapping relationship, a many-to-one mapping relationship, or a one-to-many mapping relationship between the length value of the first timer and any hop count of the relay communication radio link.

4. The method for determining a radio link failure according to claim 1 or 2, wherein before the determining, by the first terminal in a case that a first event is satisfied, that a radio link failure (RLF) occurs in a relay communication radio link between the first terminal and the second terminal, the method further comprises:
determining, by the first terminal, a length value of the first timer based on a hop count of the relay communication radio link and network side device configuration information or the terminal preconfiguration information.

5. The method for determining a radio link failure according to any one of claims 1 to 4, wherein the first indication information is carried in at least one of the following:
a sidelink relay adaptation layer protocol (SRAP) control protocol data unit (PDU); and
a PC5 RRC message.

6. The method for determining a radio link failure according to any one of claims 1 to 4, wherein the first indication information comprises at least one of the following:
a failure cause corresponding to the RLF; and
identification information corresponding to the RLF.

7. The method for determining a radio link failure according to claim 6, wherein the identification information corresponding to the RLF comprises at least one of the following:
at least one Destination layer 2 L2 identifier (ID);
an ID of at least one sidelink (SL) radio link control (RLC) channel; and
an ID of at least one SL radio bearer.

8. The method for determining a radio link failure according to claim 6, wherein the failure cause corresponding to the RLF comprises at least one of the following:
an SL RLC entity corresponding to the third terminal reaches a maximum number of retransmissions;
a T400 timer of the third terminal is expired;
an SL RLC entity corresponding to the third terminal reaches a maximum number of consecutive hybrid automatic repeat request (HARQ) discontinuous transmissions (DTX); and
an integrity protection failure is detected by an SL packet data convergence protocol (PDCP) entity corresponding to the third terminal.

9. A method for determining a radio link failure, comprising:
transmitting, by a third terminal, first indication information to a first terminal in a case that a radio link failure (RLF) occurs in a radio link between a third terminal and a next-hop terminal of the third terminal, wherein
the first indication information is used to indicate that the RLF occurs in a relay communication radio link between the first terminal and a second terminal; the first terminal communicates with the second terminal through at least one relay terminal; and the third terminal is a terminal in the at least one relay terminal.

10. The method for determining a radio link failure according to claim 9, wherein the first indication information is carried in at least one of the following:
a sidelink relay adaptation layer protocol (SRAP) control protocol data unit (PDU); and
a PC5 RRC message.

11. The method for determining a radio link failure according to claim 9 or 10, wherein the first indication information comprises at least one of the following:
a failure cause corresponding to the RLF; and
identification information corresponding to the RLF.

12. The method for determining a radio link failure according to claim 11, wherein the identification information corresponding to the RLF comprises at least one of the following:
an identifier (ID) of at least one Destination layer 2 L2;
an ID of at least one sidelink (SL) radio link control (RLC) channel; and
an ID of at least one SL radio bearer.

13. The method for determining a radio link failure according to claim 11, wherein the failure cause corresponding to the RLF comprises at least one of the following:
an SL RLC entity corresponding to the third terminal reaches a maximum number of retransmissions;
a T400 timer of the third terminal is expired;
an SL RLC entity corresponding to the third terminal reaches a maximum number of consecutive hybrid automatic repeat request (HARQ) discontinuous transmissions (DTX); and
an integrity protection failure is detected by an SL packet data convergence protocol (PDCP) entity corresponding to the third terminal.

14. A method for determining a radio link failure, comprising:
transmitting, by a network side device, configuration information related to a first timer to a first terminal, wherein the configuration information related to the first timer comprises: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

15. An apparatus for determining a radio link failure, comprising:
a communication module, configured to communicate with a second terminal through at least one relay terminal; and
a determination module, configured to determine, in a case that a first event is satisfied, that a radio link failure (RLF) occurs in a relay communication radio link between a first terminal and the second terminal, wherein
the first event comprises any one of the following:
a first timer being expired, the first timer being started by the first terminal upon transmission of a radio resource control (RRC) message to the second terminal through the relay communication radio link; and
receiving first indication information transmitted by a third terminal, the first indication information being used to indicate that the radio resource control (RLF) occurs in the relay communication radio link, and the third terminal is a terminal in the at least one relay terminal.

16. An apparatus for determining a radio link failure, comprising:
a first transmission module, configured to transmit first indication information to a first terminal in a case that radio link failure (RLF) occurs in a radio link between a third terminal and a next-hop terminal of the third terminal, wherein
the first indication information is used to indicate that the RLF occurs in a relay communication radio link between the first terminal and a second terminal; the first terminal communicates with the second terminal through at least one relay terminal; and the third terminal is a terminal in the at least one relay terminal.

17. An apparatus for determining a radio link failure, comprising:
a second transmission module, configured to transmit configuration information related to a first timer to a first terminal, wherein the configuration information related to the first timer comprises: a length value of the at least one first timer; there being a one-to-one mapping relationship, a many-to-one mapping relationship, or a one-to-many mapping relationship between the length value of the first timer and any hop count of the relay communication radio link; and the first terminal communicating with a second terminal through at least one relay terminal.

18. A first terminal, comprising a processor and a memory, the memory storing a program or instructions executable on the processor, the program or the instructions implement the method for determining a radio link failure according to any one of claims 1 to 8 when executed by the processor.

19. A third terminal, comprising a processor and a memory, the memory storing a program or instructions executable on the processor, the program or the instructions implement the method for determining a radio link failure according to any one of claims 9 to 13 when executed by the processor.

20. A network side device, comprising a processor and a memory, the memory storing a program or instructions executable on the processor, the program or the instructions implement the method for determining a radio link failure according to claim 14 when executed by the processor.

21. A readable storage medium, the readable storage medium storing a program or instructions thereon, the program or the instructions implement the method for determining a radio link failure according to any one of claims 1 to 8 when executed by the processor, or implement the method for determining a radio link failure according to any one of claims 9 to 13 when executed by the processor, or implement the method for determining a radio link failure according to claim 14.
